# EUROPÄISCHE PATENTSCHRIFT

(11) **EP 2 078 911 B1**
(45) Veröffentlichungstag und Bekanntmachung des Hinweises auf die Patenterteilung: **17.08.2011**
(21) Anmeldenummer: 08000348.6
(22) Anmeldetag: 10.01.2008
(51) Int. Cl.: F26B 11/02

(54) **Verfahren zur kontinuierlichen Trocknung von Schüttgut, insbesondere von Holzfasern und/oder Holzspänen**
Method for continuous drying of bulk material, in particular of wood fibres and/or wood chippings
Procédé destiné au séchage en continu de matériaux en vrac, en particulier de fibres de bois et/ou de copeaux de bois

(43) Veröffentlichungstag der Anmeldung: 15.07.2009
(73) Patentinhaber: Douglas Technical Limited, Douglas, Isle of Man IM1 2 PS (GB)
(72) Erfinder: Brancuzsky, Zdenek, 587 04 Jihlava (CZ); Hensel, Günter, 5928 PS Venlo (NL); Nápravník, Karel, 587 04 Jihlava (CZ); Seifert, Wolfgang, Dr., 01561 Lampertswalde (DE)
(74) Vertreter: Heselberger, Johannes

(56) Entgegenhaltungen:
- EP-A- 0 346 042
- EP-A- 0 385 372
- EP-A- 0 457 203
- EP-A- 0 459 603
- EP-A- 0 484 280
- EP-A- 0 508 546
- EP-A- 0 714 006
- WO-A-92/01897
- WO-A-92/11983
- WO-A-2004/079282
- DE-A1- 19 654 043
- DE-C1- 10 157 596
- GB-A- 1 564 743
- US-A- 2 948 966
- US-A- 5 749 160
- US-A- 5 797 332
- US-A1- 2002 064 085

## Beschreibung

Die vorliegende Erfindung betrifft ein Verfahren zur kontinuierlichen Trocknung von Schüttgut, insbesondere von Holzfasern und/oder Holzspänen, in einem Trockner, wobei die Trocknungsgase bzw. Trocknungsbrüden in einem Trocknerkreislauf geführt werden, indem die Trocknungsbrüden über Wärmetauscher indirekt erhitzt und dem Trockner erneut zugeführt werden.

Die Herstellung von Holzwerkstoffplatten basiert im Wesentlichen auf der Verpressung von zerkleinerten Holzteilen, insbesondere von Holzfasern und/oder Holzspänen. Beispielsweise bestehen Spanplatten aus feinen Holzspänen unterschiedlicher Stärke, die unter hohem Druck mit Bindemittel zu Platten gepresst sind. Holzfaserplatten werden aus verholzten Fasern mit oder ohne Bindemittelzusatz hergestellt.

Vor der Verpressung zu Platten müssen die zerkleinerten Holzteile getrocknet werden. Dies erfolgt üblicherweise in sogenannten Trommeltrocknern, wobei das Trockengut bzw. Schüttgut in einem beheizten, rotierenden Drehrohr bewegt wird. Neben der Entstehung von Wasserdampf werden bei der Trocknung auch gasförmige Holzinhaltsstoffe freigesetzt, die wegen ihrer Schadstoffwirkung nicht in die Umgebung abgegeben werden sollten. Die Trocknungsgase sind zudem mit Feinstäuben belastet. Daher müssen die Trocknungsgase vor ihrer Einleitung in die Atmosphäre gereinigt werden. Dies erfolgt herkömmlicherweise durch Entstaubung, Filterung und/oder Ausbrand im Brenner des Trockners. Um die Kosten für die Nachbehandlung der Trocknerabgase und insbesondere den zusätzlichen Energieeinsatz zu reduzieren, wurden bereits verschiedene Verfahren und Vorrichtungen vorgeschlagen, die durch Kreislaufführung der Trocknungsgase bei indirekter Beheizung durch einen Brenner eine ökonomische Verfahrensführung erlauben.

So beschreibt beispielsweise die europäische Patentanmeldung EP 0 459 603 A1 eine Trocknung von Holzspänen in einem Trommeltrockner, wobei die den Trockner verlassenden Trocknungsbrüden in einem Kreislauf zum Trockner zurückgeführt und vor dem Trockner indirekt durch die in einer Brennkammer erzeugten Rauchgase auf die zur Trocknung der Holzspäne erforderliche Temperatur aufgeheizt werden. Ein Teilstrom der Trocknungsbrüden wird aus diesem Kreislauf abgezweigt und zur Brennkammer geführt. Die Rauchgase bzw. Brennerabgase aus der Brennkammer, die zur Aufheizung der Trocknungsgase über einen Wärmetauscher genutzt werden, werden mit einem Filter gereinigt, bevor sie in die Atmosphäre abgegeben werden.

Die europäische Patentanmeldung EP 0 457 203 A1 beschreibt ebenfalls ein Trocknungsverfahren unter anderem für Holzspäne, bei welchem die Trocknungsgase über einen Wärmetauscher indirekt erwärmt und der Wärmetauscher mit Rauchgasen aus einer Brennkammer gespeist wird. Ein Teilstrom der Trocknungsbrüden aus dem Trockner wird kontinuierlich ausgekoppelt und einem Kondensator zugeführt, in welchem der Wasserdampfinhalt auskondensiert und die nicht kondensierbaren Gase als Verbrennungsluft in die Brennkammer eingeleitet werden.

Bei diesen Verfahren müssen die Temperaturen in der Brennkammer ausreichend hoch gehalten werden, um einen Ausbrand von Schadstoffen zu gewährleisten. Diese hohen Temperaturen belasten die Wärmetauscherelemente, so dass deren Lebensdauer eingeschränkt ist. Die europäische Patentanmeldung EP 0 714 006 A1 schlägt daher ein Trocknungsverfahren vor, bei welchem dem Wärmetauscher ein zweiter Wärmetauscher vorgeschaltet wird, so dass die thermische Belastung des Materials verhältnismäßig gering gehalten werden kann.

Aus der EP 0 484 280 ist eine Anlage zur Reinigung von schadstoffblasteter Luft, nämlich der Abluft von einem Spannrahmentrockner bekannt. Aus den Trocknungsbrüden soll ein Teilstrom abgeführt und einem Brenner zugeführt werden. Die Regelung der Teilstromabführung soll dabei in Abhängigkeit von Schadstoffwerten des Brennerabgases oder dem Sauerstoffgehalt im Brennerabgas erfolgen.

Aus der WO 2004/079282 A1 ist ein Verfahren zur Trocknung von festen organischen Substanzen beschrieben. Dabei soll den Trocknungsbrüden ein Strom entnommen werden, so dass der Dampfdruck innerhalb des Trockners und der Trennvorrichtung konstant bleibt und so dass der Sauerstoffgehalt so gering gehalten wird, dass das zu trocknende Material kein Feuer fangen kann.

Während des Trocknungsvorgangs entstehen im Kreislauf ständig neue, mit Schadstoffen versetzte Brüden. Der zirkulierende Trocknungsbrüdenstrom muss daher aus Gründen der im Kreislauf einzuhaltenden Massenbilanz laufend reduziert werden. Dies erfolgt beispielsweise durch Abzweigung eines Teilbrüdenstroms vor oder nach dem Wärmetauscher als Brennluft zur Brennkammer. Zur Durchflussmengenregulierung sieht beispielsweise die europäische Patentanmeldung EP 0 714 006 A1 hierfür eine herkömmliche Klappe vor.

Problematisch hierbei ist, dass das System nicht oder nur unzureichend auf unterschiedliche Bedingungen, beispielsweise unterschiedlichen Feuchtegehalt, Korngrößenschwankungen, Änderung der Holzmischung oder Laständerungen reagieren kann. Die Erfindung stellt sich daher die Aufgabe, ein verbessertes Verfahren zur kontinuierlichen Trocknung von Schüttgut bereitzustellen, welches die beschriebenen Nachteile aus dem Stand der Technik vermeidet.

Diese Aufgabe wird durch ein Verfahren und eine Vorrichtung gelöst, wie sie in den unabhängigen Ansprüchen beschrieben sind. Bevorzugte Ausführungsformen des erfindungsgemäßen Verfahrens bzw. der erfindungsgemäßen Vorrichtung werden in den abhängigen Ansprüchen dargestellt.

Bei dem erfindungsgemäßen Verfahren zur kontinuierlichen Trocknung von Schüttgut, insbesondere von Holzfasern und/oder Holzspänen, in einem Trockner, insbesondere einem Trommeltrockner, wird der Trockner mit dem Schüttgut beschickt und von einem Dampf-Gas-Gemisch in einem Trocknerkreislauf durchlaufen. Hierbei wird das Dampf-Gas-Gemisch über wenigstens einen Wärmetauscher indirekt durch ein in wenigstens einem Brenner erhitztes Brennerabgas erwärmt. Nach Durchlaufen des Trockners werden die Trocknungsbrüden dem wenigstens einen Wärmetauscher zugeführt und wieder erwärmt. Vor, nach und/oder innerhalb des wenigstens einen Wärmetauschers wird wenigstens ein Teilstrom der Trocknungsbrüden abgezweigt und dem Brenner als Kühlluft und/oder als Verbrennungsluft bzw, Brennluft zugeleitet. Der verbleibende Teilstrom wird erneut dem Trockner zugeleitet, nachdem er im wenigstens einen Wärmetauscher erwärmt wurde. Vorzugsweise werden zwei parallele Wärmetauscher eingesetzt, die im Kreuzgegenstrom betrieben werden. Mit besonderem Vorteil wird ein Teil der Trocknungsbrüden innerhalb der Wärmetauscher abgezweigt, da eine Abzweigung innerhalb der Wärmetauscher energetische und emissionstechnische Vorteile bringt.

Im Hinblick auf das eigentliche Trocknungsverfahren bewirkt die Dampfkreislauftrocknung im Vergleich mit anderen Trocknungsverfahren eine schonendere Trocknung in sauerstoffarmer Atmosphäre mit reduzierter Menge der abgespaltenen schadstoffwirksamen Verbindungen und damit eine Qualitätsverbesserung des Trockengutes. Es lässt sich hierdurch die Flexibilität und die Weichheit der Späne erhöhen, was vor allem im Hinblick auf die weitere Verarbeitung der Späne und die Qualität des Endprodukts vorteilhaft ist. Durch den Dampfkreislauf für die Trocknung, der durch die indirekte, weitgehend sauerstofffreie Beheizung der Trocknungsgase über Wärmetauscher erreicht wird, wird ein Inertgasgehalt erreicht, der als weiteren Vorteil einen Verschleiß der Vorrichtung vermindert und eine höhere Betriebssicherheit durch geringere Brand- und Explosionsgefahr bewirkt.

Das erfindungsgemäße Verfahren ist dadurch gekennzeichnet, dass der Teilstrom der Trocknungsbrüden, der vor, nach und/oder innerhalb des Wärmetauschers zum Brenner abgezweigt wird, über wenigstens einen regelbaren Teilbrüdenventliator angetrieben wird.

Der erfindungsgemäß vorgesehene regelbare Teilbrüdenventilator ermöglicht einen geregelten integrierten Ausbrand von Schadstoffen im Brenner der Trocknungsanlage. Durch die Regelbarkeit des Teilbrüdenventilators kann die Durchflussmenge und -geschwindigkeit des Teilstroms der Trocknungsbrüden zum Brenner den jeweiligen Gegebenheiten des Trocknungsverfahrens angepasst werden. Es kann beispielsweise auf bestimmte Eigenschaften des Trockengutes, wie Feuchtegehalt oder Massenstrom, reagiert werden, indem beispielsweise bei einem erhöhten Feuchtegehalt in den Trocknungsbrüden ein größerer Teilstrom zum Brenner abgezweigt wird. Dies gewährleistet eine optimale Prozessführung und effektive Beseitigung von Schadstoffen durch Ausbrand im Brenner. Der regelbare Teilbrüdenventilator ermöglicht, dass die Massen- bzw. Volumenströme erhöht und damit die Leistung des Trocknungsverfahrens signifikant gesteigert werden kann. Der Sauerstoffgehalt im Trockner kann dabei auf ein Minimum gesteuert werden, um die Abspaltung von organischen Verbindungen zu minimieren und damit die Emissionen zu reduzieren. Zudem lässt sich durch den regelbaren Teilbrüdenventilator das Ausbrandverhalten sowie die Verteilung der Brüden in der Brennkammer beeinflussen. wodurch sich Emissionen weiter reduzieren lassen.

Mit Vorteil wird bei der Regelung des Teilbrüdenventilators die Massenbilanz im System berücksichtigt, so dass es beispielsweise nicht zu einem übermäßigen Einzug von Falschluft in das System kommt. Das unkontrollierte Eindringen von Falschluft in das System würde einen energetischen Nachteil bewirken, da die Falschluft im System erst entsprechend aufgewärmt werden muss, bevor sie verfahrensgemäß genutzt werden kann. Die Regelung erfolgt daher vorzugsweise innerhalb eines bestimmten Fensters.

Erfindungsgemäß erfolgt die Regelung des Teilbrüdenventilators mittels Schadstoffwerten der Brennerabgase und nach dem Sauerstoffgehelt im Brennerabgas sowie über einen maximalen Inertgasgehalt im Trocknerkreislauf. Die Schadstoffwerte können beispielsweise direkt vor der Freisetzung der Brennerabgase in die Atmosphäre gemessen werden, wobei die Brennerabgase vorzugsweise zuvor gereinigt wurden. Als Schadstoffwerte können vorzugsweise die Stickoxidkonzentrationen und/oder die Kohlenmonoxidkonzentrationen der Brennerabgase berücksichtigt werden. Erfindungsgemäß kann es vorgesehen sein, dass bestimmte Schwellenwerte dieser Schadstoffkonzentrationen festgelegt werden, und eine Regelung des Teilbrüdenventilators im Hinblick auf eine Unterschreitung dieser Schadstoffgrenzwerte durchgeführt wird. Weiterhin wird bei der Regelung des Teilbrüdenventilators der Sauerstoffgehalt im Brennerabgas berücksichtigt. In Abhängigkeit vom eingesetzten Brennstoff kann beispielsweise die Regelung nach einem Sauerstoffgehalt von cirka 3 Vol.% bis cirka 11 Vol.% im Abgas erfolgen.

Erfindungsgemäß erfolgt die Regelung des Teilbrüdenventilators zudem über einen maximalen Inertgasgehalt im Trocknerkreislauf vorzugsweise durch Messung des Sauerstoffgehaltes und/oder des Wassergehaltes in den Trocknerkreislaufbrüden. Hierdurch kann eine höhere Leistung des Trocknungsverfahrens sowie auch eine verbesserte Qualität des Trockengutes, beispielsweise eine verbesserte Spanqualität, erreicht werden. Durch die Maximierung des Inertgasgehaltes im Trocknerkreislauf werden allgemein die Ablagerungen, Verschmutzungen und damit der Verschleiß verschiedener Bauteile einer entsprechenden Vorrichtung gering gehalten. Außerdem steigt die Betriebssicherheit durch Minimierung der Brand- und Explosionsgefahr.

In einer bevorzugten Ausführungsform des erfindungsgemäßen Verfahrens werden die Brennerabgase, die aus dem System ausgeleitet werden, über wenigstens einen Filter, insbesondere einen Elektrofilter, vorzugsweise einen Trockenelektrofilter, gereinigt. Eine Filterung der Brennerabgase ist insbesondere bei der Verfeuerung von Holzstäuben in der Brennkammer vorteilhaft, um die Emissionen gering zu halten. Ein Elektrofilter hat den Vorteil, dass er beispielsweise gegenüber herkömmlichen Schlauchfiltern die Entzündungs- und Brandgefahr verringert. Ein Trockenelektrofilter hat sich bei der Reinigung der Brennerabgase als besonders effektiv erwiesen. Mit besonderem Vorteil wird der Filter, insbesondere der Elektrofilter, im Saugbetrieb gefahren, wobei vorzugsweise dem Filter wenigstens ein Brennerabgasventilator nachgeschaltet ist. Ein Saugbetrieb des Filters ist vorteilhaft, da der dadurch bewirkte Unterdruck auf den Filter konstruktive Vorteile bringt und der nachgeschaltete Ventilator vor Verschleiß geschützt wird.

Als Brennstoff für den Brenner können übliche fossile Brennstoffe eingesetzt werden, beispielsweise Erdgas oder Leichtöl. In einer besonders bevorzugten Ausführungsform werden als Brennstoffe zusätzlich oder alternativ dazu Feststoffe, insbesondere Biomasse-Feststoffe, eingesetzt. Beispielsweise können Abfälle aus der Holzwerkstoffplattenproduktion, wie Holzstaub o.ä., verbrannt werden. Der Vorteil hierbei liegt darin, dass Abfälle, die ohnehin anfallen, als Brennstoff in der Brennkammer nutzbringend eingesetzt werden können.

In einer bevorzugten Ausführungsform des erfindungsgemäßen Verfahrens ist eine Reinigungseinrichtung für die Trocknungsbrüden, die vor allem Feinstäube und verschiedene organische Anteile aus der Trocknung des Schüttgutes enthalten, vorgesehen. Bei der Reinigungsvorrichtung kann es sich beispielsweise um einen Zyklonabscheider, insbesondere eine oder mehrere Zyklonenbatterien, handeln. Innerhalb der Zyklone werden die in den Trocknungsgasen enthaltenen festen oder flüssigen Partikel, beispielsweise Feinstäube, abgesondert, indem das Trocknungsgas in eine Drehbewegung versetzt wird und die auf die Partikel wirkenden Zentrifugalkräfte die Partikel beschleunigen und radial nach außen schleudern. Hierdurch werden die Partikel vom Gasstrom getrennt und können vorzugsweise nach unten ausgetragen werden. Vorzugsweise werden die Trocknungsbrüden zwischen dem Trockner und der Reinigungseinrichtung, beispielsweise der Zyklonenbatterie, und/oder zwischen der Reinigungseinrichtung und dem Wärmetauscher über wenigstens einen Trocknungsbrüdenventilator angetrieben. Durch die Kreislaufführung der Trocknungsgase ist der Trocknungsbrüdenventilator weitgehend vor Verschmutzung und damit Verschleiß geschützt.

In einer besonders bevorzugten Ausführungsform des erfindungsgemäßen Verfahrens wird die Wasserfracht im Trockner gesteuert. Vorzugsweise wird hierbei das Schüttgut, beispielsweise die Holzspäne oder die Holzfasern, in Abhängigkeit von deren Feuchte in verschiedene Schüttgutfraktionen aufgeteilt und das Schüttgut zur Beschickung des Trockners aus den verschiedenen Fraktionen mittels einer Materialdosiereinrichtung entsprechend dosiert, so dass eine vorgebbare Feuchte des eingebrachten Schüttgutes eingehalten werden kann. Beispielsweise können drei Silos mit jeweils einer Spansorte vorgesehen sein, wobei jede Spansorte einen bestimmten Feuchtigkeitsgehalt aufweist. Die Feuchte des Trockengutes, mit welchem der Trockner beschickt wird, kann vorzugsweise kontinuierlich gemessen werden. Beispielsweise mit Hilfe eines Leitprogramms kann die Zusammensetzung des Trockengutes gesteuert werden, so dass ein kontinuierlicher Wasserfluss im Trockner gewährleistet wird. Mit besonderem Vorteil kann die Steuerung derart erfolgen, dass der Wasserfluss im Trockner möglichst konstant gehalten wird. Diese Steuerung der Wasserfracht im Trockner hat den Vorteil, dass eine unterschiedliche Materialfeuchte des Trockengutes, beispielsweise der Holzspäne, ausgeglichen werden kann. Weiterhin kann durch die Steuerung der Wasserfracht im Trockner der Inertgasgehalt des Trocknungskreislaufes optimiert werden, was sich beispielsweise vorteilhaft auf die Qualität des Trockengutes auswirkt und zudem die Leistung des Trocknungsverfahrens erhöht.

In einer besonders bevorzugten Ausführungsform des erfindungemäßen Verfahrens werden dem Brenner weitere Abgase als Brennluft, als Kühlluft und/oder zur Muffelkühlung zugeführt. Vorzugsweise stammen diese weiteren Abgase aus einer Holzwerkstoffplattenproduktion bzw. -herstellung, beispielsweise Pressenabluft, Sägenabluft und/oder Kesselhausabluft. Diese Integration verschiedener Emissionsquellen in das erfindungsgemäße Verfahren hat den Vorteil, dass die verschiedenen Abgase innerhalb der Brennkammer nachbehandelt werden können, um auf diese Weise eine Verbrennung von Schadstoffen in den Abgasen zu erreichen. Besonders aus verfahrensökonomischen Gründen ist es bevorzugt, verschiedene Abluftströme, insbesondere alle Abluftströme einer Holzwerkstoffplattenherstellung auf diese Weise aufzuarbeiten und nachzubehandeln. Vorzugsweise werden die weiteren Abgase vor der Zuführung als Brennluft vorgewärmt. Hierfür können entsprechende Wärmetauscher vorgesehen sein, beispielsweise ThermoölWärmetauscher. Durch eine Vorwärmung der Abgase vor der Zuführung in die Brennkammer kann in besonders verfahrensökonomischer Weise die erforderliche Temperatur in der Brennkammer erreicht werden.

In einer besonders bevorzugten Ausführungsform des erfindungsmäßen Verfahrens erfolgt die Kühlluftzuführung in den Brenner über einen inneren und einen äußeren Düsenring in der Brennkammerdecke. Mit besonderem Vorteil sind diese Düsenringe getrennt voneinander steuerbar. Vorzugsweise weist der innere Düsenring und/oder der äußere Düsenring einen für den jeweiligen Brennstoff zuvor eingestellten Einblasewinkel zwischen cirka 0 und cirka 60° auf. Durch diese Gestaltung der Kühlluftzuführung bzw. der Brennkammerdecke und die damit einhergehende spezielle Luftzuführung in der Brennkammer, Führung der Sekundärluft und Kondensatbildung kann die Verbrennung in der Brennkammer in besonders vorteilhafter Weise erfolgen.

Die Kühlluftzufuhr in den Brenner kann vorzugsweise aus dem Teilbrüdenstrom gespeist werden, der beispielsweise aus dem oder den Wärmtauschern abgezweigt wird. Die Steuerung der verschiedenen Ringe für die Kühlluftzufuhr in der Brennkammerdecke erfolgt vorzugsweise mittels geeigneter Klappen.

In einer weiteren bevorzugten Ausführungsform des erfindungsgemäßen Verfahrens wird die Muffel des Brenners gekühlt. Beispielsweise kann die Muffel mit Frischluft gekühlt werden. In einer anderen bevorzugten Ausführungsform erfolgt die Muffelkühlung mit Prozessluft. Beispielsweise kann hierfür der Muffel Kühlluft zugeführt werden, die aus dem Teilbrüdenstrom abgezweigt wird, der aus der Abzweigung der Brüden vor, nach oder innerhalb des oder der Wärmetauscher stammt. In anderen Ausführungsformen kann als Muffelkühlluft Brennerabgas nach Durchlaufen des Wärmetauschers und/oder Abgase, die vor der Ausleitung über den Kamin abgezweigt werden, zugeleitet werden, insbesondere Abgase, die den Filter passiert haben. Die Regelung der Muffelkühlung erfolgt vorzugsweise nach der Muffeltemperatur, um einen Schutz der Muffel zu gewährleisten. Die Regelung kann weiterhin nach dem Kohlenmonoxidgehatt der Abgase erfolgen, wobei eine Überlagerung der Temperaturregelung der Muffel vorliegen kann.

Die Erfindung umfasst weiterhin ein Verfahren zur Herstellung von Holzwerkstoffplaften, wobei Holzstämme entrindet und in einer Zerkleinerungseinrichtung, insbesondere einer Zerspanungs- und/oder Zerfaserungseinrichtung zu Spänen und/oder Fasern verarbeitet werden. Die Späne und/oder Fasern werden in einer Trocknungseinrichtung getrocknet und gegebenenfalls unter Zusatz von Bindemitteln und/oder weiteren Additiven in einer Presseinrichtung zu Platten verarbeitet und gegebenenfalls geschnitten. Dieses Verfahren ist dadurch gekennzeichnet, dass zur Trocknung der Späne und/oder Fasern ein Verfahren durchgeführt wird, wie es oben beschrieben ist. Bezüglich weiterer Merkmale des Verfahrens zur Herstellung von Holzwerkstoffplatten wird auf die obige Beschreibung Bezug genommen.

Die Erfindung umfasst weiterhin eine Vorrichtung zur Trocknung von Schüttgut, insbesondere von Holzfasern und/oder Holzspänen, mit einem Trockner, insbesondere einem Trommeltrockner, der dazu vorgesehen ist, von einem Dampf-Gas-Gemisch in einem Trocknerkreislauf durchlaufen zu werden. Die Vorrichtung umfasst wenigstens einen Wärmetauscher zur indirekten Erwärmung des Dampf-Gas-Gemisches und einen Brenner. Der Brenner erzeugt ein Brennerabgas, das zur indirekten Erwärmung des Dampf-Gas-Gemisches vorgesehen ist. Zudem ist wenigstens eine Abzweigungsleitung zum Brenner vor, nach und/oder innerhalb des wenigstens eine Wärmetauschers für einen Teilstrom der Trocknungsbrüden und wenigstens eine Leitung für den verbleibenden Teilstrom der Trocknungsbrüden zum Trockner vorgesehen.

Die erfindungemäße Vorrichtung ist dadurch gekennzeichnet, dass für den Antrieb des Teilstroms der Trocknungsbrüden zum Brenner wenigstens ein regelbarer Teilbrüdenventilator vorgesehen ist der über Schadstoffwerte das Brennerabgases und nach dem Sauerstoffgehalt im Brennerabgas sowie über einen maximalen Inertgasgehalt im Trocknerkreislauf regelbar int. Bezüglich weiterer Merkmale der erfindungsgemäßen Vorrichtung wird auf die obige Beschreibung verwiesen.

Schließlich umfasst die Erfindung eine Anlage zur Herstellung von Holzwerkstoffplatten mit wenigstens einer Zerkleinerungseinrichtung, insbesondere einer Zerspanungs- und/oder Zerfaserungseinrichtung, wenigstens einer Presseinrichtung und wenigstens einer Trocknungseinrichtung für Schüttgut, wie sie oben beschrieben ist. Bezüglich weiterer Merkmale dieser Anlage zur Herstellung von Holzwerkstoffplatten bzw. zur Trocknungseinrichtung dieser Anlage wird auf die obige Beschreibung verwiesen.

Das erfindungsgemäße Verfahren zur Trocknung von Schüttgut ist insbesondere zur Trocknung von Holzspänen geeignet. Die erfindungsgemäß vorgesehene Dampfatmosphäre im Trocknungskreislauf wirkt sich besonders vorteilhaft auf die Qualität der Späne aus. Durch die hierdurch realisierte schonende Trocknung der Späne werden plastisch flexible und weiche Späne erreicht, die im Wesentlichen keine thermische Verfärbung zeigen. Durch die Inertgasatmosphäre während der Trocknung reduziert sich das Zündpotential des Trockengutes und damit die Brandgefahr im Trockner bzw. in der gesamten Anlage. Entsprechendes gilt, wenn das erfindungsgemäße Verfahren auf die Trocknung von Holzfasern angewendet wird. Bei der Trocknung von Holzfasern ist insbesondere die erfindungsgemäß kontrollierte und gesteuerte Feuchte des Trockengutes vorteilhaft, da die Feuchte von Holzfasern bei deren weiterer Verarbeitung, insbesondere im Pressstrang, herkömmlicherweise oft problematisch ist. Anders als bei der Verarbeitung von Holzspänen findet keine Zwischenlagerung der getrockneten Holzfasern statt. Vielmehr schließt sich die Pressung von Holzfasern direkt an die Trocknung an, so dass sich der Feuchtegehalt des Trockengutes direkt im Pressstrang abbildet. Das erfindungsgemäße Verfahren bewirkt den Vorteil, dass eine gesteuerte und gleichbleibend gute Qualität des getrockneten Schüttgutes für die weitere Verarbeitung zur Verfügung gestellt werden kann.

Weitere Vorteile und Merkmale der Erfindung ergeben sich aus der nachfolgenden Beschreibung der Zeichnung in Verbindung mit den Ausführungsbeispielen und den Unteransprüchen. Hierbei können die verschiedenen Merkmale jeweils für sich oder in Kombination miteinander verwirklicht sein.

In den Zeichnungen zeigen:
- Fig. 1: eine schematische Darstellung eines Schaltbildes für eine An- lage, die für eine bevorzugte Ausführung des erfindungemäßen Verfahrens geeignet ist:
- Fig. 2: eine schematische Darstellung eines Schaltbildes für eine An- lage zur Durchführung einer bevorzugten Ausführung des erfin- dungsgemäßen Verfahrens mit Erweiterungen in der Luftfüh- rung; und
- Fig. 3: eine schematische Darstellung eines Schaltbilds für eine Anla- ge zur Durchführung einer bevorzugten Ausführung des erfin- dungsgemäßen Verfahrens mit Integration einer Kesselanlage.

### Ausführungsbeispiele

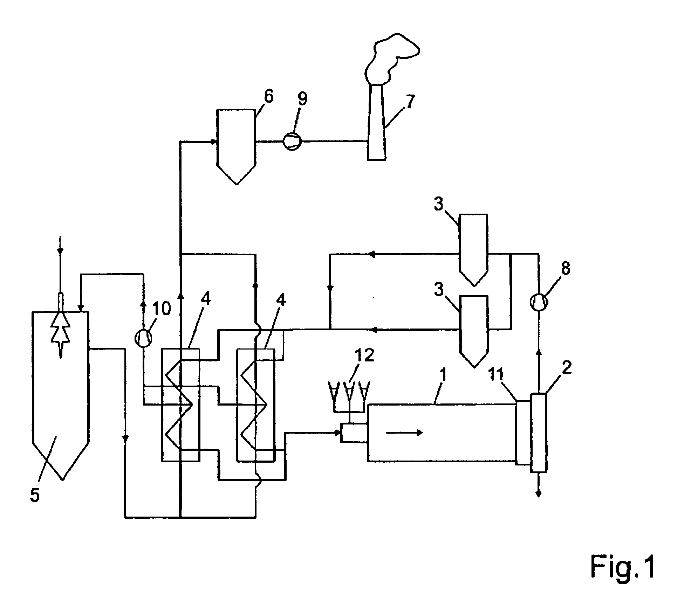

Das in **Figur 1** gezeigte Schaltbild einer Anlage zur Durchführung des erfindungsgemäßen Verfahrens umfasst einen Trommeltrockner 1, ein Ausfallgehäuse 2, eine Reinigungseinrichtung 3, Wärmetauscher 4, eine Brennkammer 5, einen Filter 6 sowie einen Kamin 7. Zwischen Trommeltrockner 1 und der Reinigungseinrichtung 3 ist ein Trocknungsbrüdenventilator 8, zwischen Filter 6 und Kamin 7 ist ein Brennerabgasventilator 9 und zwischen Wärmetauscher 4 und Brennkammer 5 ist ein regelbarer Teilbrüdenventilator 10 angeordnet.

Der Trockner 1 kann mit einer Beruhigungszone 11 und einer Dosiereinrichtung 12 ausgestattet sein.

Der Trommeltrockner 1 wird mit Schüttgut, beispielsweise mit Holzspänen und/oder Holzfasern beschickt. Die Trocknungsgase, die dem Trommeltrockner 1 zugeführt werden, werden über die Wärmetauscher 4 erwärmt und weisen Temperaturen von cirka 250°C bis cirka 600°C auf. Die Erwärmung der Trocknungsgase in den Wärmetauschern 4 erfolgt im Kreuzgegenstrom mittels Brenngasen aus der Brennkammer 5. Diese Brenngase weisen Temperaturen von cirka 750°C bis cirka 900°C auf. Innerhalb der Brennkammer 5 werden Temperaturen von cirka 750°C bis cirka 1050°C erreicht, wobei als Brennstoff beispielsweise Erdgas, Leichtöl und/oder Holzstaub oder andere Abfälle aus der Holzwerkstoffplattenproduktion eingesetzt werden können. Die verschiedenen Brennstoffe können einzeln oder in beliebiger Mischung verbrannt werden.

Nachdem das Trockengut den Trommeltrockner 1 durchlaufen hat, kann eine Beruhigungszone 11 für das Trockengut und/oder ein Ausfallgehäuse 2 zur Entnahme des getrockneten Schüttgutes vorgesehen sein. Die Trocknungsgase bzw. Trocknungsbrüden werden mittels des Trocknungsbrodenventilators 8 zu einem oder mehreren Reinigungseinrichtungen 3, vorzugsweise Zyklonabscheider, weitergeleitet. Alternativ oder zusätzlich hierzu kann ein Trocknungsbrüdenventilator zwischen Reinigungseinrichtung 3 und Wärmetauscher 4 vorgesehen sein. In der Reinigungseinrichtung 3 erfolgt die Abtrennung von Feinstaub und anderen Partikeln. Das abgeschiedene Material kann vorteilhafterweise der Produktion zugeführt werden. Nachdem die Trocknungsbrüden die Reinigungseinrichtungen 3 durchlaufen haben, werden sie einem oder mehreren Wärmetauschern 4 zugeleitet. Besonders bevorzugt sind zwei parallel geschaltete Wärmetauscher. Innerhalb der Wärmetauscher 4 werden die Trocknungsbrüden von cirka 110°C bis cirka 130°C auf cirka 250°C bis cirka 600°C erwärmt. Dies erfolgt im Kreuzgegenstrom mittels der Brennerabgase aus der Brennkammer 5. Innerhalb der Wärmetauscher 4 wird ein Teilbrüdenstrom entnommen und der Brennkammer 5 als Verbrennungsluft und/oder Kühlluft zugeführt. Dieser Teilbrüdenstrom wird durch den regelbaren Teilbrüdenventilator 10 angetrieben. Das Brennerabgas, das zur Erwärmung der Trocknungsgase im Wärmetauscher 4 dient, wird nach Durchlaufen der Wärmetauscher 4 einem Filter 6 zugeleitet. Hierbei handelt es sich insbesondere um einen Elektrofilter, vorzugsweise um einen Trockenelektrofilter. Der Filter 6 wird vorzugsweise im Saugbetrieb gefahren, wobei dem Filter 6 ein Brennerabgasventilator 9 nachgeschaltet ist. Das derart gereinigte Brennerabgas wird über den Kamin 7 in die Atmosphäre entlassen.

Erfindungsgemäß erfolgt die Trocknung der Späne in einem eigenen Dampfkreislauf. Hierdurch kann mit besonderem Vorteil ein hoher Dampfgehalt und damit eine schonende Trocknung realisiert werden, die sich positiv auf die Qualität des Trockengutes auswirkt. Zudem wird hierdurch die Verschmutzung und damit der Verschleiß innerhalb des Trocknungskreislaufes gering gehalten. Auch wird der Brandschutz durch eine indirekte Beheizung des Trockners und den eigenen Trocknungskreislauf verbessert.

Die Regelung des Teilbrüdenventilators 10 erfolgt erfindungsgemäß über Schadstoffwerte der Brennerabgase, beispielsweise über Stickoxidkonzentrationswerte und/oder Kohlenmonoxidkonzentrationswerte, über einen maximalen Inertgasgehalt im Trocknerkreislauf und über den Sauerstoffgehalt im Brennerabgas.

In einer bevorzugten Ausführungsform erfolgt bei der Beschickung des Trommeltrockners 1 mit Schüttgut eine Steuerung der Wasserfracht im Trockner mittels der Dosiereinrichtung 12, wobei das Schüttgut in Abhängigkeit von der Feuchte verschiedener Schüttgutfraktionen bei der Beschickung des Trommeltrockners 1 dosiert wird.

Als Brennluft für den Brenner 5 werden vorzugsweise verschiedene Abgase aus der Holzwerkstoffplattenherstellung eingesetzt, beispielsweise Pressenabluft, Diasägenabluft und/oder Kesselhausabluft. Die verschiedenen Abgase werden vorzugsweise vor der Zuführung als Brennluft vorgewärmt, insbesondere mittels Wärmetauschern.

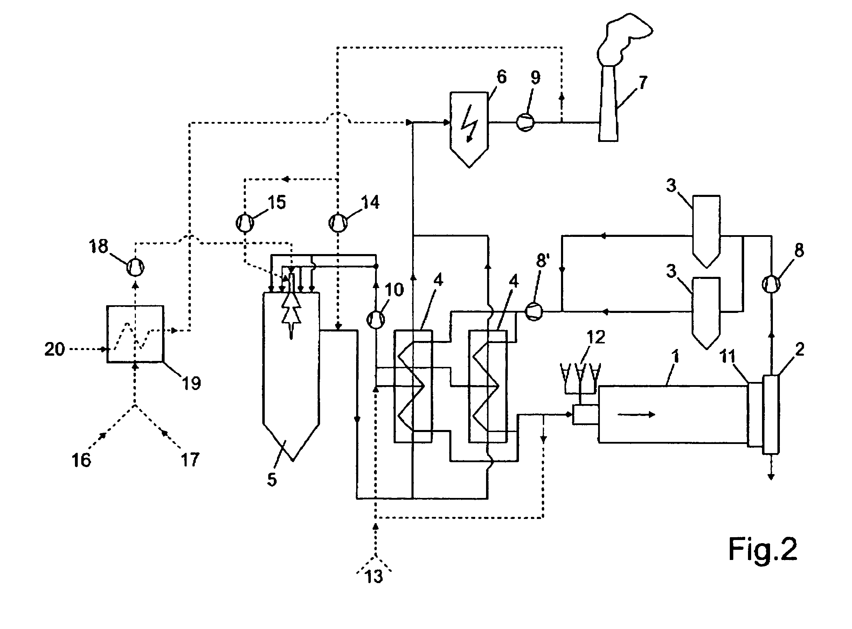

**Figur 2** zeigt ein Schaltbild einer erfindungsgemäßen Anlage zur kontinuierlichen Trocknung von Schüttgut, bei welchem verschiedene Möglichkeiten der Luftführung gezeigt sind. Die verschiedenen Elemente der Anlage sind mit gleichen Bezugszeichen wie in Figur 1 bezeichnet. Der Trocknungsbrüdenventilator 8' ist zwischen Reinigungseinrichtung 3 und Wärmetauschern 4 angeordnet. Diese Anordnung kann alternativ oder zusätzlich zur Anordnung des Trocknungsbrüdenventilators 8 zwischen Trockner 1 und Reinigungseinrichtung 3 vorgesehen sein. Dem Brenner 5 wird die Kühlluft über die Brennkammerdecke in zwei Ringen zugeführt. Diese Kühlluft wird aus den Trocknungsbrüden innerhalb der Wärmetauscher 4 abgezweigt und mittels des regelbaren Teilbrüdenventilators 10 angetrieben. Dieser Luftstrom kann durch eine weitere Luftquelle 13 ergänzt oder ersetzt werden. Weiterhin kann dieser Luftstrom durch eine Abzweigung eines Teilstroms der erwärmten Trocknungsgase nach den Wärmetauschern 4 ergänzt werden. Diese zuschaltbaren Luftströme sind in Figur 2 in gestrichelter Strichführung dargestellt. Den Brennerabgasen, die den Brenner 5 verlassen, kann, bevor sie den Wärmetauschern 4 zugeleitet werden, Brennerabgas zugeleitet werden, das die Wärmetauscher 4 bereits durchlaufen hat, insbesondere Brennerabgas, das bereits den Filter 6 durchlaufen hat. Dieses Brennerabgas kann alternativ oder zusätzlich hierzu auch als Muffelkühlluft und/oder Brennluft in die Brennkammer 5 zurückgeführt werden. Für den Antrieb der Brennerabgasströme sind vorzugsweise Ventilatoren 14 und 15 vorgesehen.

Die Brennluft für den Brenner 5 kann vorzugsweise aus verschiedenen Quellen stammen. Beispielsweise kann hierfür Pressenabluft 16 und/oder Diasägenabluft 17 eingesetzt werden. Diese Abluft wird über einen weiteren Ventilator 18 angetrieben und der Brennkammer 5 als Brennluft zugeführt. Vorteilhafterweise wird diese Brennluft vor der Einführung in die Brennkammer 5 vorgewärmt, insbesondere über einen Wärmetauscher 19, der durch Kesselabluft 20 gespeist wird. Vorzugsweise wird diese Kesselabluft nach Durchlaufen des Wärmetauschers 19 dem Filter 6 zugeführt und über den Kamin 7 in die Atmosphäre abgegeben.

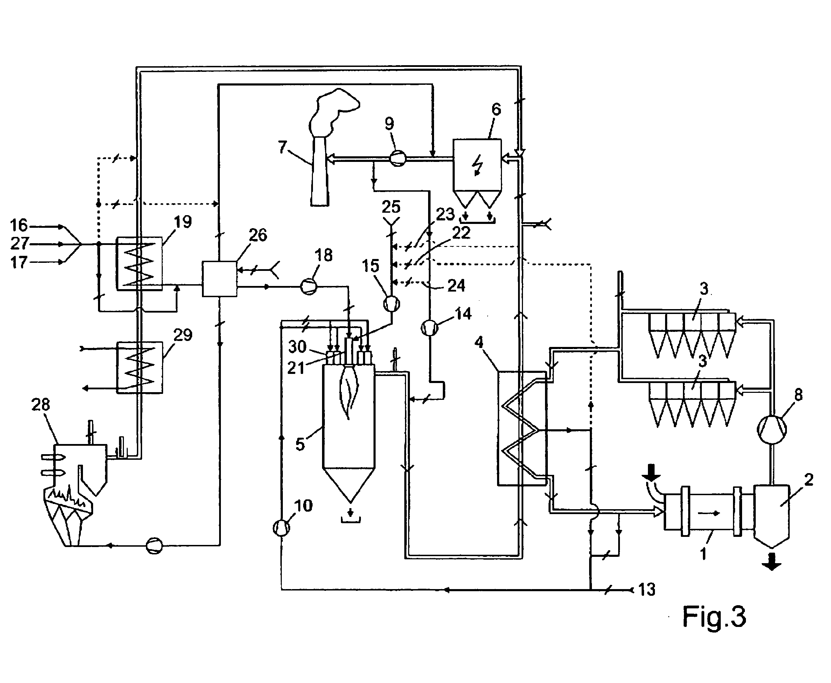

**Figur 3** zeigt eine weitere Ausgestaltung einer Anlage zur Durchführung des erfindungsgemäßen Verfahrens mit Integration einer Kesselanlage und verschiedenen Luftströmen. Die verschiedenen Elemente der Anlage sind mit gleichen Bezugszeichen wie in Figur 1 bezeichnet. Die Anlage weist einen Trockner 1, ein Ausfallgehäuse 2, eine Reinigungseinrichtung 3 in Form von zwei Zyklonenabscheidern und einen Wärmetauscher 4 im eigentlichen Trocknungskreislauf auf. Der Wärmetauscher 4 wird durch Brennerabluft aus dem Brenner 5 gespeist. Innerhalb des Wärmetauschers 4 wird ein Teilstrom der Trocknungsbrüden abgezweigt. Der Teilstrom wird mit dem regelbaren Teilbrüdenventilator 10 angetrieben und gesteuert und dem Brenner 5 als Kühlluft zugeleitet. Die Kühlluftzufuhr erfolgt über innere und äußere Düsenringe 30 in der Brennkammerdecke des Brenners 5.

Die Muffel 21 des Brenners 5 wird durch die Zuleitung von Kühlluft gekühlt. Diese Kühlluft wird mittels des Ventilators 15 angetrieben. Die Speisung dieser Kühlluftleitung bzw. die Kühlung der Muffel 21 kann über verschiedene Leitungen erfolgen. Beispielsweise kann die Muffelkühlung mit Frischluft 25 erfolgen. Alternativ oder zusätzlich hierzu kann eine Speisung mit Teilbrüden 22, mit Brennerabgas nach Wärmetauscher 23 oder Abluft nach Elektrofilter 24 erfolgen. Die Zuleitung dieser verschiedenen Luftströme kann über die entsprechend vorgesehenen Klappen erfolgen. Die Verbrennungsluft für den Brenner 5 wird über den Ventilator 18 angetrieben. Als Verbrennungsluft kann Abluft aus der Presse 16 bzw. dem Pressenwäscher oder der Diasäge 17 und/oder andere Abluft 27 eingesetzt werden. Diese Abluft wird über einen Wärmetauscher 19, insbesondere einen Luft/Luft-Wärmetauscher, aufgeheizt.

Die Zuleitung als Verbrennungsluft wird über einen Mischtopf 26 gesteuert. Der Wärmetauscher 19 wird von Kesselabgasen gespeist, die in der Kesselanlage 28 entstehen. Zur Temperierung der Kesselabluft für den Wärmetauscher 19 kann ein weiterer Wärmetauscher 29, insbesondere ein Thermoölwärmetauscher, vorgesehen sein. Die mittels des Wärmetauschers 19 vorgewärmte Verbrennungsluft kann durch entsprechende Schaltung im Wärmetopf 26 zum Brenner 5, zur Ausfeuerung der Kesselanlage 28 und/oder zum Kamin 7 geleitet werden.

## Patentansprüche

1. Verfahren zur kontinuierlichen Trocknung von Schüttgut, insbesondere von Holzfasern und/oder Holzspänen, in einem Trockner (1), insbesondere einem Trommeltrockner, der mit dem Schüttgut beschickt und von einem Dampf-Gas-Gemisch in einem Trocknerkreislauf durchlaufen wird, wobei das Dampf-Gas-Gemisch über wenigstens einen Wärmetauscher (4) indirekt durch ein in wenigstens einem Brenner (5) erhitztes Brennerabgas erwärmt wird und die Trocknungsbrüden dem wenigstens einen Wärmetauscher (4) zugeführt und erwärmt werden und vor, nach und/oder innerhalb des wenigstens einen Wärmetauschers (4) wenigstens ein Teilstrom der Trocknungsbrüden zur Einleitung in den Brenner (5) abgezweigt wird, und der verbleibende Teilstrom erneut dem Trockner (1) zugeleitet wird, **dadurch gekennzeichnet, dass** der Teilstrom zum Brenner (5) über wenigstens einen regelbaren Teilbrüdenventilator (10) angetrieben wird, der über Schadstoffwerte des Brennerabgases und nach dem Sauerstoffgehalt im Brennerabgas sowie über einen maximalen Inertgasgehalt im Trocknerkreislauf geregelt wird.

2. Verfahren nach Anspruch 1, **dadurch gekennzeichnet, dass** die Schadstoffwerte des Brennerabgases Stickoxide und/oder Kohlenmonoxide sind.

3. Verfahren nach einem der vorhergehenden Ansprüche, **dadurch gekennzeichnet, dass** das Brennerabgas über wenigstens einen Filter (6), insbesondere einen Elektrofilter, vorzugsweise einen Trockenelektrofilter, gereinigt wird.

4. Verfahren nach Anspruch 3, **dadurch gekennzeichnet, dass** der Filter (6) im Saugbetrieb gefahren wird, wobei vorzugsweise dem Filter wenigstens ein Brennerabgasventilator (9) nachgeschaltet ist.

5. Verfahren nach einem der vorhergehenden Ansprüche, **dadurch gekennzeichnet, dass** als Brennstoff für den Brenner (5) zumindest teilweise Feststoffe, insbesondere Biomasse-Feststoffe, verwendet werden, wobei vorzugsweise Abfälle aus der Holzwerkstoffplattenproduktion verwendet werden.

6. Verfahren nach einem der vorhergehenden Ansprüche, **dadurch gekennzeichnet, dass** die Trocknungsbrüden nach Durchlaufen des Trockners (1) gereinigt werden, wobei vorzugsweise als Reinigungseinrichtung (3) wenigstens ein Zyklon, insbesondere wenigstens eine Zyklonenbatterie, eingesetzt wird.

7. Verfahren nach einem der vorhergehenden Ansprüche, **dadurch gekennzeichnet, dass** die Trocknungsbrüden nach dem Trockner (1) über wenigstens einen Trocknungsbrüdenventilator (8) angetrieben werden.

8. Verfahren nach einem der vorhergehenden Ansprüche, **dadurch gekennzeichnet, dass** die Wasserfracht im Trockner (1) gesteuert wird, wobei vorzugsweise das Schüttgut in Abhängigkeit von der Feuchte verschiedener Schüttgutfraktionen bei der Beschickung des Trockners (1) dosiert wird.

9. Verfahren nach einem der vorhergehenden Ansprüche, **dadurch gekennzeichnet, dass** dem Brenner (5) wenigstens ein weiteres Abgas als Brennluft und/oder Kühlluft zugeführt wird, wobei vorzugsweise das weitere Abgas aus einer Holzwerkstoffplattenherstellung stammt, insbesondere Pressenabluft, Sägenabluft und/oder Kesselhausabluft.

10. Verfahren nach Anspruch 9, **dadurch gekennzeichnet, dass** das weitere Abgas vor der Zuführung als Brennluft vorgewärmt wird.

11. Verfahren nach einem der vorhergehenden Ansprüche, **dadurch gekennzeichnet, dass** die Kühlluftzuführung im Brenner (5) über einen inneren und einen äußeren Düsenring in der Brennkammerdecke erfolgt, wobei vorzugsweise die Düsenringe getrennt voneinander steuerbar sind.

12. Verfahren nach Anspruch 11, **dadurch gekennzeichnet, dass** der innere- und/oder äußere Düsenring einen Einblasewinkel zwischen cirka 0 und cirka 60°aufweist, der vorzugsweise je nach Brennstoff einstellbar ist.

13. Verfahren zur Herstellung von Holzwerkstoffplatten, wobei Holzstämme entrindet und in einer Zerkleinerungseinrichtung zu Spänen und/oder Fasern verarbeitet werden, die Späne und/oder Fasern in einer Trocknungseinrichtung getrocknet werden, die getrockneten Späne und/oder Fasern gegebenenfalls unter Zusatz von Bindemittel und/oder weiteren Additiven in einer Presseinrichtung zu Platten verarbeitet und vorzugsweise geschnitten werden, **dadurch gekennzeichnet, dass** zur Trocknung der Späne und/oder Fasern ein Verfahren nach einem der Ansprüche 1 bis 12 durchgeführt wird.

14. Vorrichtung zur Trocknung von Schüttgut, insbesondere von Holzfasern und/oder Holzspänen, mit einem Trockner (1), insbesondere einem Trommeltrockner, wenigstens einem Brenner (5) und wenigstens einem Wärmetauscher (4), der dafür vorgesehen ist, ein Dampf-Gas-Gemisch zur Trocknung des Schüttgutes im Trockner (1) indirekt zu erwärmen, wenigstens einer Abzweigungsleitung vor, nach und/oder innerhalb des wenigstens einen Wärmetauschers (4) zum Brenner (5) für einen Teilstrom der Trocknungsbrüden, und wenigstens einer Leitung für den verbleibenden Teilstrom zum Trockner (1), **dadurch gekennzeichnet, dass** in der Abzweigungsleitung zum Brenner (5) wenigstens ein regelbarer Teilbrüdenventilator (10) vorgesehen ist, der über Schadstoffwerte des Brennerabgases und nach dem Sauerstoffgehlat im Brennerabgas sowie über einen maximalen Inertgasgehalt im Trocknerkreislauf regelbar ist.

15. Vorrichtung nach Anspruch 14, **dadurch gekennzeichnet, dass** die Schadstoffwerte der Brennerabgase Stickoxide und/oder Kohlenmonoxide sind.

16. Vorrichtung nach einem der Ansprüche 14 bis 15, **dadurch gekennzeichnet, dass** zur Reinigung von Brennerabgasen wenigstens ein Filter (6), insbesondere ein Elektrofilter, vorzugsweise ein Trockenelektrofilter, vorgesehen ist.

17. Vorrichtung nach Anspruch 16, **dadurch gekennzeichnet, dass** dem Filter (6) wenigstens ein Brennerabgasventilator (9) nachgeschaltet ist.

18. Vorrichtung nach einem der Ansprüche 14 bis 17, **dadurch gekennzeichnet, dass** zur Reinigung von Trocknungsbrüden eine Reinigungseinrichtung (3), insbesondere wenigstens ein Zyklon, vorzugsweise wenigstens eine Zyklonenbatterie, vorgesehen ist.

19. Vorrichtung nach einem der Ansprüche 14 bis 18, **dadurch gekennzeichnet, dass** nach dem Trockner (1) wenigstens ein Trocknungsbrüdenventilator (8) vorgesehen ist.

20. Vorrichtung nach einem der Ansprüche 14 bis 19, **dadurch gekennzeichnet, dass** zur Steuerung der Wasserfracht im Trockner (1) eine Dosiereinrichtung (12) vorgesehen ist.

21. Vorrichtung nach einem der Ansprüche 14 bis 20, **dadurch gekennzeichnet, dass** wenigstens eine Zufuhrleitung für weitere Abgase als Brennluft in den Brenner (5) vorgesehen ist.

22. Vorrichtung nach Anspruch 21, **dadurch gekennzeichnet, dass** Vorwärmungseinrichtungen, insbesondere Wärmetauscher, für eine Vorwärmung der weiteren Abgase vor der Zuführung in den Brenner (5) vorgesehen sind.

23. Vorrichtung nach einem der Ansprüche 14 bis 22, **dadurch gekennzeichnet, dass** der Brenner (5) eine Brennkammerdecke mit einem inneren und einem äußeren Düsenring mit getrennter Steuerbarkeit aufweist.

24. Vorrichtung nach Anspruch 23, **dadurch gekennzeichnet, dass** der innere und/oder äußere Düsenring einen Einblasewinkel von cirka 0 bis cirka 60° aufweist.

25. Anlage zur Herstellung von Holzwerkstoffplatten mit wenigstens einer Zerkleinerungseinrichtung, wenigstens einer Trocknungseinrichtung und wenigstens einer Presseinrichtung, **dadurch gekennzeichnet, dass** eine Trocknungseinrichtung gemäß der Vorrichtung nach einem der Ansprüche 14 bis 24vorgesehen ist.

## Claims

1. Method for continuously drying bulk goods, in particular wood fibers and/or wood chips, in a dryer (1), in particular a drum dryer, which is supplied with bulk goods and trough which a vapour gas mixture passes in a drying circuit, wherein the vapour gas mixture is indirectly heated via at least one heat exchanger (4) by a burner exhaust gas which is heated in at least one burner (5) and wherein the drying vapours are guided and heated up in the at least one heat exchanger (4) and wherein upstream, downstream and/or within the at least one heat exchanger (4) at least a partial flow of the drying vapours is branched off to be conducted into the burner (5), and the remaining partial flow is guided again to the dryer (1), **characterized in that** the partial flow to the burner (5) is driven by means of at least one regulable partial vapour fan (10), which is regulated via the pollution level of the burner exhaust gases and according to the oxygen content in the exhaust gas as well as via a maximum inert gas content in the drying circuit.

2. Method according to claim 1 **characterized in that** the pollution levels of the burner exhaust gases are nitrogen oxides and/or carbon monoxides.

3. Method according to anyone of the preceding claims **characterized in that** the burner exhaust gas is cleaned by at least one filter (6), in particular an electrostatic precipitator, preferably a dry type electrostatic precipitator.

4. Method according to claim 3 **characterized in that** the filter (6) is operated in suction mode, wherein preferably at least one burner exhaust gas fan (9) is located downstream from the filter.

5. Method according to anyone of the preceding claims, **characterized in that**, at least partially, solids are used as fuel for the burner (5), in particular biomass, wherein preferably waste products from the production of the wooden material boards are used.

6. Method according to anyone of the preceding claims, **characterized in that** the drying vapours are cleaned after passing through the dryer (1), whereby preferably as cleaning apparatus (3), at least one cyclone, in particular at least one cyclone battery is used.

7. Method according to anyone of the preceding claims, **characterized in that** the drying vapours after the dryer (1) are driven by at least one drying vapour fan (8).

8. Method according to anyone of the preceding claims **characterized in that** the water content in the dryer (1) is regulated, whereby preferably the bulk goods are metered depending on the moisture of different bulk good fractions when supplying the dryer (1).

9. Method according to anyone of the preceding claims, **characterized in that** the burner (5) is supplied with at least one further exhaust gas as combustion air and/or cooling air, wherein preferably additional exhaust gas is taken from the manufacturing of the wooden material boards, and is in particular exhaust gas from the presses, exhaust gas from the sawing arrangements and/or exhaust gas from the boiler.

10. Method according to claim 9, **characterized in that** the additional exhaust gas is preheated before it is supplied as combustion air.

11. Method according to anyone of the preceding claims, **characterized in that** the cooling air supply in the burner (5) occurs via an inner and an outer nozzle ring in the seeding of the combustion chamber, wherein preferably the nozzle rings can be regulated separately from each other.

12. Method according to claim 11, **characterized in that** the inner and/or the outer nozzle ring has (have) an entering angle between approximately 0 and approximately 60 degrees, which angle is preferably adjustable depending on the fuel used.

13. Method fort the manufacturing of wooden material boards, wherein wood logs are stripped of bark and are possessed in a crushing apparatus to wood chips and/or fibers, wherein the wood chips and/or fibers are dried in a drying apparatus, wherein the dried wood chips and/or fibers are possessed to boards in a pressing arrangement, if necessary by adding binders and/or further additives and are preferably cut into size, **characterized in that** for drying of the wood chips and/or fibers, a method according to anyone of claims 1 to 12 is carried out.

14. Arrangement for drying of bulk goods, in particular of wood fibers and/or wood chips, comprising a dryer (1), in particular a drum dryer, at least one burner (5) and at least one heat exchanger (4), which is provided to indirectly heat a vapour gas mixture for drying the bulk goods in the dryer (1), at least one branch line, upstream, downstream and/or within the at least one heat exchanger (4) to the burner (5) to branch off a partial flow of the drying vapours, and at least one line for the remaining partial flow to the dryer (1), **characterized in that** in the branch line to the burner (5) at least one regulable partial vapour fan (10) is provided, which is regulable via the pollution level in the burner exhaust gas and according to the oxygen content in the burner exhaust gas as well as by the maximum inert gas content in the drying circuit.

15. Apparatus according to claim 14, **characterized in that** the pollution level of the burner exhaust gas are nitrogen oxides and/or carbon monoxides.

16. Apparatus according to anyone of claims 14 to 15, **characterized in that** for cleaning of the burner exhaust gases at least one filter (6) is provided, in particular an electrostatic precipitator, preferably a dry type electrostatic precipitator.

17. Apparatus according to claim 16, **characterized in that** a burner exhaust gas fan (9) is positioned downstream of the filter (6).

18. Apparatus according to one of claims 14 to 17, **characterized in that** for cleaning of the drying vapours, a cleaning arrangement (3) is provided, in particular at least one cyclone, preferably at last one cyclone battery.

19. Apparatus according to one of claims 14 to 18, **characterized in that** downstream of the dryer (1) at least one drying vapour fan (8) is provided.

20. Apparatus according to one of claims 14 to 19, **characterized in that** to regulate the water content in the dryer (1), a metering device (12) is provided.

21. Apparatus according to one of claims 14 to 20, **characterized in that** at least one supply line for additional exhaust gases as combustion air into the burner (5) is provided.

22. Apparatus according to claim 21, **characterized in that** as preheating devices, in particular heat exchanger, are provided for a preheating of the additional exhaust gas before the same are supplied to the burner (5).

23. Apparatus according to one of claims 14 to 22, **characterized in that** the burner comprises a combustion chamber sealing with an inner and an outer nozzle ring being separately controllable.

24. Apparatus according to claim 23, **characterized in that** the inner and/or outer nozzle ring comprises an entering angle of approximately 0 degrees to approximately 60 degrees.

25. Arrangement for the manufacturing of wooden material boards with at least one crushing device, at least one drying device and at least one pressing device, **characterized in that** a drying arrangement according to the apparatus of any of claims 14 to 24 is provided.

## Revendications

1. Procédé de séchage en continu de matériaux en vrac, en particulier de fibres de bois et/ou de copeaux de bois, dans un sécheur (1), en particulier dans un sécheur à tambour, que l'on charge du matériau en vrac et qui est traversé par un mélange vapeur/gaz dans un circuit sécheur, le mélange vapeur/gaz étant chauffé par l'intermédiaire d'au moins un échangeur de chaleur (4) indirectement par des fumées chauffées dans au moins un brûleur (5), et les buées de séchage étant amenées audit au moins un échangeur de chaleur (4) et chauffées, au moins un courant partiel des buées de séchage étant dérivé, en amont, en aval et/ou à l'intérieur dudit au moins un échangeur de chaleur (4) pour s'écouler dans le brûleur (5), et le courant partiel restant étant amené de nouveau au sécheur (1), **caractérisé en ce que** le courant partiel s'écoulant vers le brûleur (5) est entraîné par au moins un ventilateur à buées partielles (10) réglable qui est régulé par le taux de pollution dans les fumées du brûleur et en fonction de la teneur en oxygène dans les fumées du brûleur ainsi que par une teneur maximale en gaz inerte dans le circuit sécheur.

2. Procédé selon la revendication 1, **caractérisé en ce que** les polluants dans les fumées du brûleur sont des oxydes d'azote et/ou des monoxydes de carbone.

3. Procédé selon l'une des revendications précédentes, **caractérisé en ce que** les fumées du brûleur sont purifiées par au moins un filtre (6), en particulier par un électro-filtre, de préférence par un électro-filtre sec.

4. Procédé selon la revendication 3, **caractérisé en ce que** l'on fait fonctionner le filtre (6) en régime aspirateur, de préférence au moins un ventilateur à fumées (9) étant agencé en aval du filtre.

5. Procédé selon l'une des revendications précédentes, **caractérisé en ce que** l'on utilise à titre de combustible pour le brûleur (5) au moins en partie des solides, en particulier des solides de biomasse, en utilisant de préférence des déchets provenant de la production de panneaux en matériau à base de bois.

6. Procédé selon l'une des revendications précédentes, **caractérisé en ce que** les buées de séchage, après avoir traversé le sécheur (1), sont purifiées en utilisant, à titre de système de purification (3), de préférence au moins un cyclone, en particulier au moins une batterie de cyclones.

7. Procédé selon l'une des revendications précédentes, **caractérisé en ce que** les buées de séchage an aval du sécheur (1) sont entraînées par au moins un ventilateur à buées de séchage (8).

8. Procédé selon l'une des revendications précédentes, **caractérisé en ce que** l'on contrôle le débit cumulé dans le sécheur (1), le matériau en vrac étant dosé de préférence en fonction de l'humidité de différentes fractions de matériau en vrac lors du chargement dans le sécheur (1).

9. Procédé selon l'une des revendications précédentes, **caractérisé en ce que** l'on amène au brûleur (5) au moins un autre type de fumées à titre d'air de combustion et/ou de refroidissement, les autres fumées provenant de préférence d'une production de panneaux en matériau à base de bois, en particulier de l'air vicié provenant d'une presse, d'une scie et/ou de la chaufferie.

10. Procédé selon la revendication 9, **caractérisé en ce que** les autres fumées sont préchauffées avant d'être alimentées à titre d'air de combustion.

11. Procédé selon l'une des revendications précédentes, **caractérisé en ce que** l'alimentation en air de refroidissement dans le brûleur (5) est réalisée par des anneaux formant buse intérieur et extérieur agencés au plafond de la chambre de combustion, les anneaux formant buse pouvant de préférence être commandés séparément l'un de l'autre.

12. Procédé selon la revendication 11, **caractérisé en ce que** l'anneau formant buse intérieur et/ou extérieur présente un angle de soufflage compris entre environ 0° et environ 60°, qui est de préférence réglable en fonction du combustible.

13. Procédé de production de panneaux en matériau à base de bois, dans lequel on écorce des troncs d'arbre et on les transforme en copeaux et/ou en fibres dans une machine à fragmenter le bois, on fait sécher les copeaux et/ou les fibres dans un ensemble de séchage, on transforme les copeaux et/ou les fibres séché(e)s en panneaux dans un ensemble de pressage, le cas échéant en ajoutant des liants et/ou d'autres additifs, et de préférence on les découpe, **caractérisé en ce que** pour faire sécher les copeaux et/ou les fibres, on met en oeuvre un procédé selon l'une des revendications 1 à 12.

14. Dispositif de séchage de matériaux en vrac, en particulier de fibres de bois et/ou de copeaux de bois, comportant un sécheur (1), en particulier un sécheur à tambour, au moins un brûleur (5) et au moins un échangeur de chaleur (4) destiné à faire chauffer indirectement un mélange vapeur/gaz pour le séchage du matériau en vrac dans le sécheur (1), au moins un conduit de dérivation agencé en amont, en aval et/ou à l'intérieur dudit au moins un échangeur de chaleur (4) et menant vers le brûleur (5) pour un courant partiel des buées de séchage, et au moins un conduit destiné au courant partiel restant et menant vers le sécheur (1), **caractérisé en ce qu'**il est prévu, dans le conduit de dérivation menant vers le brûleur (5), au moins un ventilateur à buées partielles (10) réglable, qui est régulé par le taux de pollution dans les fumées du brûleur et en fonction de la teneur en oxygène dans les fumées du brûleur ainsi que par une teneur maximale en gaz inerte dans le circuit sécheur.

15. Dispositif selon la revendication 14, **caractérisé en ce que** les polluants dans les fumées du brûleur sont des oxydes d'azote et/ou des monoxydes de carbone.

16. Dispositif selon l'une des revendications 14 à 15, **caractérisé en ce qu'**en vue de purifier les fumées du brûleur, il est prévu au moins un filtre (6), en particulier un électro-filtre, de préférence un électro-filtre sec.

17. Dispositif selon la revendication 16, **caractérisé en ce qu'**en aval du filtre est prévu au moins un ventilateur à fumées (9).

18. Dispositif selon l'une des revendications 14 à 17, **caractérisé en ce qu'**en vue de purifier les buées de séchage, il est prévu un système de purification (3), en particulier au moins un cyclone, de préférence au moins une batterie de cyclones.

19. Dispositif selon l'une des revendications 14 bis 18, **caractérisé en ce qu'**en aval du sécheur (1) est prévu au moins un ventilateur à buées de séchage (8).

20. Dispositif selon l'une des revendications 14 à 19, **caractérisé en ce qu'**en vue de contrôler le débit cumulé dans le sécheur (1), il est prévu un dispositif de dosage (12).

21. Dispositif selon l'une des revendications 14 à 20, **caractérisé en ce qu'**il est prévu au moins un conduit d'alimentation pour alimenter d'autres fumées à titre d'air de combustion dans le brûleur (5).

22. Dispositif selon la revendication 21, **caractérisé en ce qu'**il est prévu des moyens de préchauffage, en particulier des échangeurs de chaleur, en vue de préchauffer les autres fumées avant de les alimenter au brûleur (5).

23. Dispositif selon l'une des revendications 14 à 22, **caractérisé en ce que** le brûleur (5) comprend un plafond de chambre de combustion pourvu d'anneaux formant buse intérieur et extérieur susceptibles d'être commandés séparément l'un de l'autre.

24. Dispositif selon la revendication 23, **caractérisé en ce que** l'anneau formant buse intérieur et/ou extérieur présente un angle de soufflage d'environ 0° à environ 60°.

25. Installation de production de panneaux en matériau à base de bois, comprenant au moins une machine à fragmenter le bois, au moins un ensemble de séchage et au moins un ensemble de pressage, **caractérisée en ce qu'**il est prévu un ensemble de séchage conforme au dispositif selon l'une des revendications 14 à 24.
